Europäisches Patentamt

European Patent Office

Office européen des brevets

(19)

(11) Veröffentlichungsnummer: **0 060 537**
**B1**

(12) **EUROPÄISCHE PATENTSCHRIFT**

(45) Veröffentlichungstag der Patentschrift:
**19.06.85**

(51) Int. Cl.⁴: **A 01 G 23/04**, B 23 P 17/00

(21) Anmeldenummer: **82102025.2**

(22) Anmeldetag: **12.03.82**

(54) **Baumverpflanzungsgerät.**

(30) Priorität: **13.03.81 DE 3109727**

(43) Veröffentlichungstag der Anmeldung:
**22.09.82 Patentblatt 82/38**

(45) Bekanntmachung des Hinweises auf die Patenterteilung:
**19.06.85 Patentblatt 85/25**

(84) Benannte Vertragsstaaten:
**AT BE CH DE FR GB IT LI LU NL SE**

(56) Entgegenhaltungen:
**DE - A - 2 902 597**
**US - A - 2 990 630**
**US - A - 3 460 277**
**US - A - 3 558 177**
**US - A - 4 226 033**

(73) Patentinhaber: **Opitz, Dieter, Waldhausstrasse 8,
D-8548 Heideck (DE)**

(72) Erfinder: **Opitz, Dieter, Waldhausstrasse 8,
D-8548 Heideck (DE)**

(74) Vertreter: **Wuesthoff, Franz, Dr.-Ing. et al, Patentanwälte
Wuesthoff -v. Pechmann-Behrens-Goetz
Schweigerstrasse 2, D-8000 München 90 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft ein Baumverpflanzungsgerät mit
— einer Tragvorrichtung, die an einem Fahrzeug anzubringen ist,
— zwei Hauptrahmenteilen, die an der Tragvorrichtung heb- und senkbar angeordnet sind und sich in einer abgesenkten Grabstellung rings um einen zu verpflanzenden Baum oder Strauch zu einem Hauptrahmen schließen lassen, der in einer im wesentlichen waagerechten Ebene liegt,
— zwei Paar Lagerböcken, die an den Hauptrahmenteilen befestigt sind,
— zwei Spaten, von denen jeder zumindest annähernd die Oberflächenform einer Viertelkugel hat und an je einem Paar Lagerböcke um eine Schwenkachse schwenkbar gelagert ist, wobei die Schwenkachsen beider Spaten zur Ebene des Hauptrahmens zumindest annähernd parallel sind, durch den Mittelpunkt der zugehörigen Viertelkugel verlaufen und bei geschlossenem Hauptrahmen zusammenfallen,
— und Schwenkvorrichtungen, die am Hauptrahmen abgestützt und mit den Spaten verbunden sind, um diese um ihre Schwenkachsen zwischen einer Stellung, in der sie einen im wesentlichen geschlossenen Kübel bilden, und einer offenen Stellung zu schwenken.

Bei einem bekannten Baumverpflanzungsgerät dieser Gattung (US-PS 2 990 630) erstreckt sich der Hauptrahmen außen um die beiden viertelkugelförmigen Spaten herum um die Lagerböcke für die Spaten sind an den in Fahrtrichtung des zugehörigen Fahrzeugs vorderen und hinteren Enden des Hauptrahmens angeordnet. Als Schwenkvorrichtungen sind den Spaten je zwei Kettentriebe zugeordnet, deren Ketten sich in zwei zur Äquatorialebene der Spaten parallelen Ebene außen um die Spaten herum erstrecken.

Bei diesem bekannten Baumverpflanzungsgerät verbraucht der im Verhältnis zu den Spaten sperrige Hauptrahmen einen großen Teil der durch Zulassungsvorschriften für den Straßenverkehr zulässigen Gesamtbreite und Gesamthöhe des Gerätes, so daß der Kugeldurchmesser der Spaten erheblich kleiner sein muß als die Gesamtabmessungen des Gerätes. Trotz kräftiger Bemessung des Hauptrahmens kann das bekannte Gerät nicht besonders verwindungssteif sein, weil die am Hauptrahmen angreifenden Kräfte große Hebelarme haben. Durch Verwindungen des Hauptrahmens werden die Schwenkantriebe für die Spaten erheblichen zusätzlichen Belastungen ausgesetzt, die deren Lebensdauer verringern. Abträglich für die Lebensdauer der Schwenkantriebe ist außerdem, daß die außen um die Spaten herumgeführten Ketten sich vor Verschmutzungen nicht schützen lassen, so daß diese Ketten und die zugehörigen Kettenräder rasch verschleißen.

Es ist zwar auch schon ein Baumverpflanzungsgerät bekannt (US-PS 3 460 277), bei dem mehrere Spaten rings um einen Hauptrahmen angeordnet sind. Der Hauptrahmen ist jedoch einstückig ausgebildet und nur mit einem radialen Schlitz versehen, damit er sich um einen Baumstamm herumlegen läßt. Die Spaten sind prismatisch abgewinkelt oder zylindrisch gewölbt und an vom Rahmen schräg nach oben wegragenden geraden Führungen verschiebbar geführt, so daß sie sich schräg zueinander hin geradlinig in den Boden einstecken lassen. Der Platzbedarf der Führungen für die Spaten ist erheblich größer als derjenige des von den Spaten in ihrer abgesenkten Stellung gebildeten Kübels.

Der Erfindung liegt die Aufgabe zugrunde, ein Baumverpflanzungsgerät zu schaffen, das sich durch Einfachheit und Robustheit sowie durch einen im Verhältnis zu seinen Gesamtabmessungen großen Durchmesser des von den Spaten umschlossenen Raumes auszeichnet.

Die Aufgabe ist einem Baumverpflanzungsgerät der eingangs beschriebenen Gattung erfindungsgemäß dadurch gelöst, daß
— der Hauptrahmen innerhalb des von den beiden Spaten umschlossenen Raumes angeordnet ist,
— die Lagerböcke aus diesem Raum heraus nach oben ragen,
— die Spaten an Tragarmen befestigt sind, die in je einer diesen Raum sekantenartig durchschneidenden Ebene schwenkbar an je einem der Lagerböcke gelagert sind,
— und die Schwenkvorrichtungen an den Lagerböcken und Tragarmen angelenkte Linearantriebe, insbesondere Kolbenzylindereinheiten, sind.

Sieht man von der Tragvorrichtung ab, die an den Einsatzzweck des Baumverpflanzungsgerätes und an die Art des zu dessen Beförderung vorgesehenen Fahrzeugs angepaßt ist, so ist der Raumbedarf des erfindungsgemäßen Baumverpflanzungsgerätes kaum größer als das Volumen der von den Spaten umschlossenen Kugel. Innerhalb dieser Kugel sind zusätzlich zu dem Hauptrahmen die Lagerböcke, die Tragarme und mindestens die Hauptteile der vorzugsweise als Kolbenzylindereinheiten ausgebildeten Schwenkvorrichtungen untergebracht. Da das Baumverpflanzungsgerät über seine Hauptrahmenteile an der Tragvorrichtung befestigt ist, braucht auch diese nicht oder jedenfalls nicht wesentlich breiter zu sein als der von den Spaten selbst beanspruchte Raum; infolgedessen kann der Durchmesser der von den Spaten umschlossenen Kugel, und somit der Durchmesser der Wurzelballen, die das erfindungsgemäße Baumverpflanzungsgerät ausstechen kann, nahezu so groß sein wie die größte durch Straßenverkehrsvorschriften festgelegte zulässige Gesamtbreite des Fahrzeugs, an dem das erfindungsgemäße Baumverpflanzungsgerät über seine Tragvorrichtung angebracht ist.

Es ist vorteilhaft, wenn jeder an einem der Hauptrahmenteile befestigte Lagerbock eine Anlagefläche hat, die bei geschlossenem Hauptrahmen an einer entsprechenden Anlagefläche eines an dem anderen Hauptrahmenteil befestigten Lagerbocks anliegt. Dadurch wird eine unmittelbare Kraftübertragung zwischen den Lagerböcken ermöglicht und infolgedessen die Verwindungssteifheit des erfindungsgemäßen Baumverpflanzungsgerätes erhöht.

Zweckmäßigerweise liegen die Anlenkstellen der Schwenkvorrichtung an den Lagerböcken bei geschlossenem Hauptrahmen auf einer gemeinsamen Anlenkachse, die sich zumindest annähernd normal zu den Anlageflächen an den Lagerböcken erstreckt.

Es ist ferner vorteilhaft, wenn die Spaten an ihrem oberen Rand durch je einen Spatenrahmen verstärkt sind, mit dem sie an den zugehörigen Tragarmen befestigt sind.

Die Schnittkanten der Spaten sind vorzugsweise an deren Innenseite schräggeschliffen.

Dabei ist besonders zweckmäßig, wenn die Schnittkanten der zu einem geschlossenen Kübel vereinigten Spaten zickzackförmig ineinandergreifen und die längsten von ihnen eine Länge von 20 bis 30% des Kugelradius der Spaten haben.

Die beiden letztgenannten Maßnahmen ermöglichen es, die Spaten aus verhältnismäßig dünnen Stahlblech herzustellen, da einerseits die zum Eindrücken der Spaten in den Boden erforderlichen Kräfte von den Tragarmen über die Spatenrahmen im wesentlichen gleichmäßig auf den oberen Rand jedes Spatens verteilt werden und andererseits durch die zickzackförmigen und vorzugsweise schräggeschliffenen Schnittkanten die zum Eindrücken der Spaten erforderlichen Kräfte geringgehalten und nach außen gerichtet sind, so daß die Spaten im Bereich ihrer Schnittkanten auf Dehnung beansprucht sind und infolgedessen weniger zu Verformungen neigen als bei Druckbeanspruchungen durch von außen auf die Spaten einwirkende Radialkräfte.

Ein Ausführungsbeispiel der Erfindung wird im folgenden anhand schematischer Zeichnungen mit weiteren Einzelheiten beschrieben. Es zeigt:

Fig. 1 eine Seitenansicht eines erfindungsgemäßen Baumverpflanzungsgerätes,

Fig. 2 die zugehörige Draufsicht,

Fig. 3 den senkrechten Schnitt III-III in Fig. 2,

Fig. 4 den waagerechten Schnitt IV-IV in Fig. 1,

Fig. 5 eine Seitenansicht des Baumverpflanzungsgerätes in einer gegenüber Fig. 1 bis 4 veränderten Betriebsstellung,

Fig. 6 eine Draufsicht desselben Baumverpflanzungsgerätes in einer weiteren Stellung.

Das dargestellte Baumverpflanzungsgerät hat eine Tragvorrichtung 10 mit einem Paar abgewinkelte Kopfstücke 12, die an je einem Ende zweier paralleler Teleskopträger 14 befestigt sind. Die beiden Teleskopträger 14 sind an einem nicht dargestellten Fahrzeug um eine gemeinsame waagerechte Achse schwenkbar sowie um eine lotrechte Achse drehbar angeordnet; eine solche Anordnung ist beispielsweise bei fahrbaren Drehleitern üblich und deshalb nicht dargestellt. Zu der Tragvorrichtung 10 gehört ferner ein Paar Winkelhebel 16, die mit je einem der Kopfstücke 12 durch je ein Gelenk 18 sowie eine im Abstand davon angeordnete Kolbenzylindereinheit 20 schwenkbar verbunden sind. Die beiden Gelenke 18 haben eine gemeinsame, in jeder möglichen Stellung der Teleskopträger 14 waagerechte Achse und dementsprechend sind die beiden Winkelhebel 16 in je einer senkrechten Ebene schwenkbar.

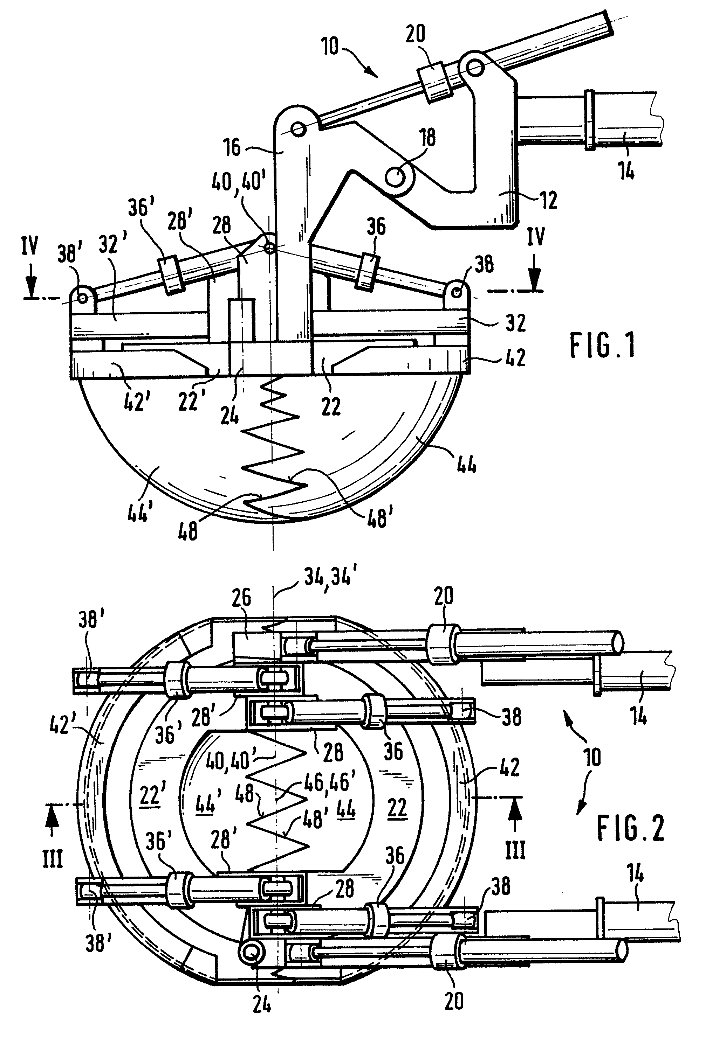

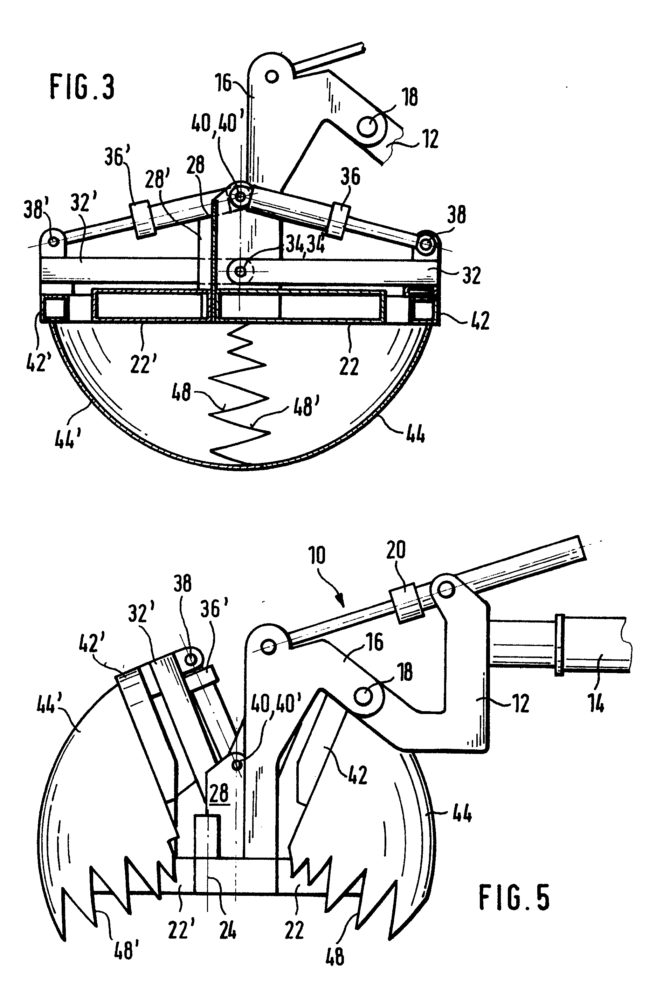

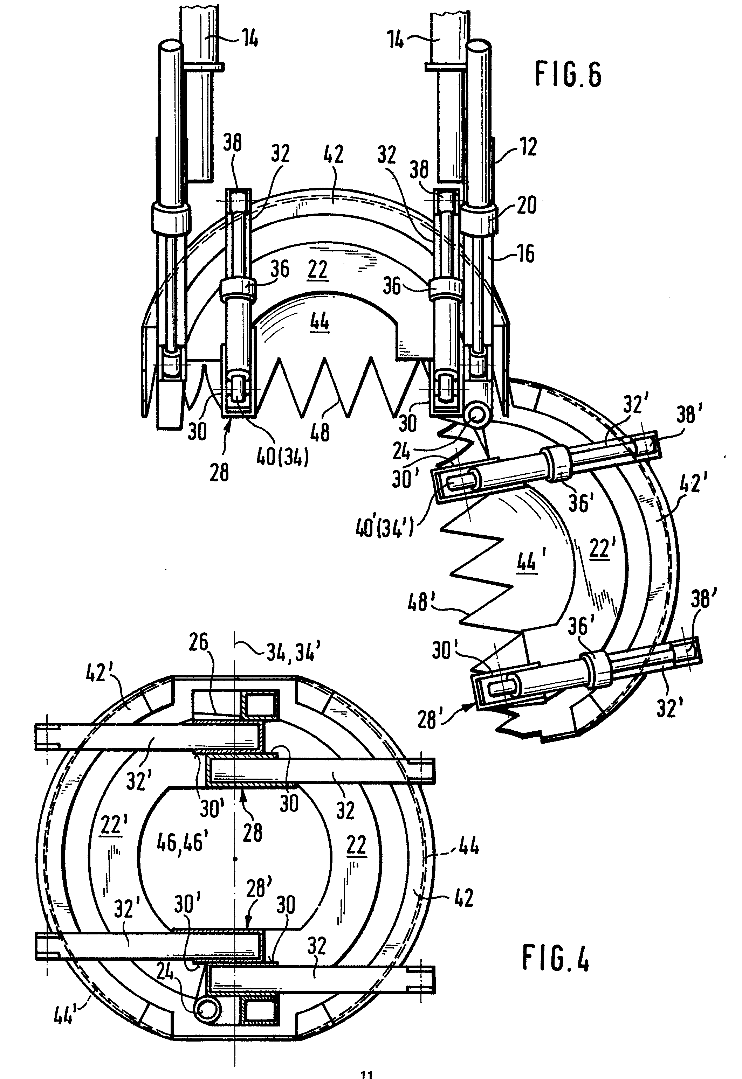

An den beiden Winkelhebeln 16 ist ein Hauptrahmenteil 22 befestigt, das mit einem zweiten Hauptrahmenteil 22' durch ein Scharnier 24 mit senkrechter Achse verbunden ist. Die beiden Hauptrahmenteile bilden zusammen einen waagerechten Hauptrahmen 22, 22', der in Fig. 1 bis 5 in seiner geschlossenen Stellung dargestellt ist. Dem Scharnier 24 diametral gegenüber ist am Hauptrahmen ein Verschluß 26 ausgebildet, der die beiden Hauptrahmenteile 22 und 22' in ihrer geschlossenen Stellung zusammenhält. Aus der geschlossenen Stellung läßt sich das Hauptrahmenteil 22' gemäß Fig. 6 um etwa 100° vom Hauptrahmenteil 22 wegschwenken.

Am Hauptrahmenteil 22 sind zwei Lagerböcke 28 befestigt, die sich im Abstand voneinander nach oben erstrecken. In entsprechender Weise sind am Hauptrahmenteil 22' zwei Lagerböcke 28' befestigt, die in ihrer Gestaltung mit den Lagerböcken 28 übereinstimmen, jedoch gegenüber diesen seitenverkehrt angeordnet sind. Die Lagerböcke 28 und 28' sind im waagerechten Querschnitt gemäß Fig. 4 im wesentlichen U-förmig und jeweils nach der Seite hin offen, nach der sich der zugehörige Hauptrahmenteil 22 bzw. 22' erstreckt. Jeder der Lagerböcke 28 hat eine senkrechte Anlagefläche 30, die im geschlossenen Zustand des Hauptrahmens 22, 22' an einer entsprechenden Anlagefläche 30' eines der Lagerböcke 28' anliegt. Die Lagerböcke 28 und 28' überlappen einander also im geschlossenen Zustand des Hauptrahmens 22, 22', ohne jedoch den Hauptrahmenteil 22' daran zu hindern, gemäß Fig. 6 vom Hauptrahmenteil 22 weggeschwenkt zu werden.

In den beiden Lagerböcken 28 sind zwei parallele Tragarme 32 um eine gemeinsame, waagerechte Schwenkachse 34 schwenkbar gelagert. Die Schwenkachse 34 erstreckt sich in einem geringen Abstand von der senkrechten Achse des Scharniers 24 und ist in jeder möglichen Stellung der Tragvorrichtung 10 parallel zur gemeinsamen Achse der beiden Gelenke 18. In entsprechender Weise sind an den beiden Lagerböcken 28' zwei Tragarme 32' um eine gemeinsame, waagerechte Schwenkachse 34' schwenkbar gelagert. Die Schwenkachse 34' fällt bei geschlossenem Hauptrahmen 22, 22' mit der Schwenkachse 34 zusammen.

Mit jedem der Tragarme 32 und 32' ist eine Schwenkvorrichtung 36 bzw. 36' durch ein Gelenk 38 bzw. 38' verbunden. Die beiden Schwenkvorrichtungen 36 sind an den beiden Lagerböcken 28 um eine gemeinsame Anlenkachse 40 schwenkbar angelenkt; die Anlenkachse 40 ist in einem Abstand senkrecht über der Schwenkachse 34 parallel zu dieser angeordnet. In entsprechender Weise sind die beiden Schwenkvorrichtungen 36' um eine gemeinsame, zur Schwenkachse 34' parallele Anlenkachse 40' schwenkbar an je einem der beiden Lagerböcke 28' angelenkt. Bei geschlossenem Hauptrahmen 22, 22' fallen die beiden Anlenkachsen 40 und 40' zusammen.

An den Enden der beiden Tragarme 32 ist ein annähernd halbkreisförmig gebogenes Spatenrahmenteil 42 befestigt; ein entsprechendes Spatenrahmenteil 42' ist an den Enden der beiden Tragarme 32' befestigt. An jedem der beiden Spatenrahmenteile 42 und 42' ist ein annähernd viertelkugelförmiger Spaten 44 bzw. 44' mit seinem oberen Rand befestigt. Der Kugelmittelpunkt 46 bzw. 46' jedes Spatens 44, 44' liegt auf der Schwenkachse 34 bzw. 34' der beiden zugehörigen Tragarme 32 bzw 32'. Dementsprechend fallen die beiden Mittelpunkte 46 und 46' zusammen, wenn der Hauptrahmen 22, 22' geschlossen ist.

Die beiden Spaten 44 und 44' haben zueinander komplementäre, zickzackförmige Schnittkanten 48 bzw. 48', längs derer sie aneinandergrenzen, wenn der Hauptrahmen 22, 22' geschlossen ist und die Schwenkvorrichtung 36 und 36' gemäß Fig. 1 bis 4 ausgefahren sind, wobei die Tragarme 32 und 32' in einer waagerechten Ebene liegen. Die einzelnen geradlinigen Abschnitte jeder der beiden zickzackförmigen Schnittkanten 48 und 48' haben eine Länge von 20 bis 30% des Kugelradius R (Fig. 7a) der beiden Spaten 44 und 44'.

Wenn mit dem beschriebenen Baumverpflanzungsgerät ein Baum ausgegraben werden soll, werden die beiden Hauptrahmenteile 22 und 22' gemäß Fig. 6 auseinandergeklappt, was von Hand oder mit einer nicht dargestellten weiteren Kolbenzylindereinheit geschehen kann. Gleichzeitig oder auch zuvor oder danach werden durch Einfahren der Schwenkvorrichtungen 36 und 36' die Tragarme 32 und 32' samt den Spatenrahmenteilen 42 und 42' daran befestigten Spaten 44 und 44' gemäß Fig. 5 nach oben geschwenkt. Sodann wird der Hauptrahmen 22, 22' rings um den Stamm des Baumes geschlossen und durch den Verschluß 26 verriegelt. Daraufhin werden die Teleskopträger 14 abgesenkt, so daß die unteren, von den Schnittkanten 48 und 48' gebildeten Zähne der Spaten 44 und 44' soweit in den Boden eindringen, bis der Hauptrahmen 22, 22' auf dem Boden aufliegt. Anschließend werden die Schwenkvorrichtungen 36 und 36' wieder ausgefahren, wodurch die Spaten 44 und 44' wieder zueinander hin geschwenkt werden, bis sie schließlich im Boden einen den Wurzelballen des Baumes enthaltenden, geschlossenen Kübel gemäß Fig. 1 bis 4 bilden. Nun läßt sich der Baum mit seinem Wurzelballen durch Aufwärtsschwenken der Teleskopträger 14 aus dem Boden herausheben und durch Einfahren der Kolbenzylindereinheiten 20 in eine schräge Stellung bringen, in der er sich leichter transportieren läßt. Vorzugsweise werden für den Transport die Teleskopträger 14 mit dem gesamten beschriebenen Baumverpflanzungsgerät um eine senkrechte Achse geschwenkt, so daß die Krone des Baumes in bezug auf das Fahrzeug nach hinten gerichtet ist.

Die Schwenkvorrichtungen 36 und 36' sind in ihrer bevorzugten Ausbildungsform als hydraulische Kolbenzylindereinheiten dargestellt; sie könnten aber auch von anderen bekannten Linearantrieben, beispielsweise Gewindehülsen und Gewindespindeln, gebildet sein. Wesentlich ist, daß die Schwenkvorrichtungen 36 und 36' in jeder Betriebsstellung oberhalb der Spaten 44 und 44' angeordnet sind, somit niemals in den Boden eindringen müssen und deshalb vor Verschmutzung aus daraus folgendem Verschleiß geschützt sind.

Die Spaten 44 und 44' bestehen vorzugsweise aus hartem Stahl; besonders bewährt hat sich ein hochfester, vergüteter Feinkornbaustahl mit der DIN-Bezeichnung 17MnCrMo33. Chemische Zusammensetzungen und mechanische Eigenschaften eines solchen Stahls sind bekannt aus dem von der Thyssen Aktiengesellschaft herausgegebenen Werkstoffblatt 210 vom Juni 1977. Vorzugsweise wird der dort mit der Stahlbezeichnung N-A-XTRA 70 versehene Stahl mit einer Mindeststreckgrenze von 690 N/mm$^2$ für die Spaten 44 und 44' verwendet.

**Patentansprüche**

1. Baumverpflanzungsgerät mit

— einer Tragvorrichtung (10), die an einem Fahrzeug anzubringen ist,
— zwei Hauptrahmenteilen (22, 22'), die an der Tragvorrichtung (10) heb- und senkbar angeordnet sind und sich in einer abgesenkten Grabstellung rings um einen zu verpflanzenden Baum oder Strauch zu einem Hauptrahmen (22, 22') schließen lassen, der in einer im wesentlichen waagerechten Ebene liegt,
— zwei Paar Lagerböcken (28, 28'), die an den Hauptrahmenteilen (22, 22') befestigt sind,
— zwei Spaten (44, 44'), von denen jeder zumindest annähernd die Oberflächenform einer Viertelkugel hat und an je einem Paar Lagerböcke (28, 28') um eine Schwenkachse (34, 34') schwenkbar gelagert ist, wobei die Schwenkachsen beider Spaten (44, 44') zur Ebene des Hauptrahmens (22, 22') zumindest annähernd parallel sind, durch den Mittelpunkt (46 bzw. 46') der zugehörigen Viertelkugel verlaufen und bei geschlossenem Hauptrahmen (22, 22') zusammenfallen,
— und Schwenkvorrichtungen (36, 36'), die am Hauptrahmen (22, 22') abgestützt und mit den Spaten (44, 44') verbunden sind, um diese um ihre Schwenkachsen (34, 34') zwischen einer Stellung, in der sie einen im wesentlichen geschlossenen Kübel bilden, und einer offenen Stellung zu schwenken,

dadurch gekennzeichnet, daß

— der Hauptrahmen (22, 22') innerhalb des von den beiden Spaten (44, 44') umschlossenen Raumes angeordnet ist,
— die Lagerböcke (28, 28') aus diesem Raum heraus nach oben ragen,
— die Spaten (44, 44') an Tragarmen (32, 32') befestigt sind, die in je einer diesen Raum sekantenartig durchschneidenden Ebene schwenkbar an je einem der Lagerböcke (28, 28') gelagert sind,
— und die Schwenkvorrichtungen (36, 36') an den Lagerböcken (28, 28') und Tragarmen (32, 32') angelenkte Linearantriebe sind.

2. Baumverpflanzungsgerät nach Anspruch 1, dadurch gekennzeichnet, daß jeder an einem der Hauptrahmenteile (22) befestigte Lagerbock (28) eine Anlagefläche (30) hat, die bei geschlossenem Hauptrahmen (22, 22') an einer entsprechenden Anlagefläche (30') eines an dem anderen Hauptrahmenteil (22') befestigten Lagerbocks (28') anliegen.

3. Baumverpflanzungsgerät nach Anspruch 2, dadurch gekennzeichnet, daß die Anlenkstellen der Schwenkvorrichtungen (36, 36') an den Lagerböcken (28, 28') bei geschlossenem Hauptrahmen (22, 22') auf einer gemeinsamen Anlenkachse (40) liegen, die sich zumindest annähernd normal zu den Anlageflächen (30, 30') an den Lagerböcken (28, 28') erstreckt.

4. Baumverpflanzungsgerät nach einem der Ansprüche 1 bis 3, dadurch gekennzeichnet, daß die Spaten (44, 44') an ihrem oberen Rand durch je einen Spatenrahmen (42, 42') verstärkt sind, mit dem sie an den zugehörigen Tragarmen (32, 32') befestigt sind.

5. Baumverpflanzungsgerät nach Anspruch 4, dadurch gekennzeichnet, daß die Schnittkanten (48, 48') der Spaten (44, 44') an deren Innenseite schräggeschliffen sind.

6. Baumverpflanzungsgerät nach einem der Ansprüche 1 bis 5, dadurch gekennzeichnet, daß die Schnittkanten (48, 48') der zu einem geschlossenen Kübel vereinigten Spaten (44, 44') zickzackförmig ineinandergreifen und die längsten von ihnen eine Länge von 20 bis 30% des Kugelradius (R) der Spaten (44, 44') haben.

**Claims**

1. A tree transplanting machine comprising

— a supporting means (10) to be mounted on a vehicle,
— two main frame parts (22, 22') wich are disposed at the supporting means (10) to be raised and lowered and which in lowered digging position are claosed to form a main frame (22, 22') about a tree or shrub to be transplante, said main frame being arranged along a substantially horizontal plane,
— two pairs of blocks (28, 28') secure to the parts of the main frame (22, 22'),
— two spades (44, 44') each of them being shaped at least approximately like a quarter-sphere and each being pivoted at a pair of blocks (28, 28') about an axis of rotation (34, 34'), the axes of rotation of the two spades (44, 44') being at least approximately in parallel to the plane of the main frame (22, 22'), said axes running through the center point (46, 46') of the corresponding quarter-sphere and coninciding when the main frame (22, 22') is in closed position,
— and means for pivoting (36, 36') supported at the main frame (22, 22') and connected to the spades (44, 44') to pivot them about their axes of rotation (34, 34') between a position in which they form a subtantially· closed bucket, and an open position,

characterized in that

— the main frame (22, 22') is arranged within the space enclosed by the two spades (44, 44'),
— the blocks (28, 28') project out of this space upwardly,
— the spades (44, 44') are attached to supporting arms (32, 32') which are pivotable in respective planes intersecting said space like a secant, each of the supporting arms being supported by one of the blocks (28, 28'),
— the means for pivoting (36, 36') are linear drives pivoted at the blocks (28, 28')and the supporting arms (32, 32').

2. A tree transplating machine as defined in claim 1, characterized in that each of the blocks (28) secured to the main frame parts (22) comprises a contact surface (30) abutting against a corresponding contact surface (30')of a block (28') secured to the other main frame part (22') when the main frame (22, 22') is in closed position.

3. A tree transplanting machine as defined in claim 2, characterized in that the pivotal points of the means for pivoting (36, 36') at the blocks (28, 28') are arranged on a common axis of rotation (40) when the main frame (22, 22') is in closed position, said axis of rotation extending at least approximately perpendiculary with respect to the contact surfaces (30, 30') at the blocks (28, 28').

4. A tree transplanting machine as defined in any one of claims 1 to 3 characterized in that each of the spades (44, 44') is reinforced at its upper edge by a spade rim (42, 42') by means of which it is secured to the corresponding supporting arm (32, 32').

5. A tree transplanting machine as defined in claim 4, characterized in that the cutting edges (48, 48') of the spades (44, 44') are ground to a bevelled configuration at the interior side of the spades.

6. A tree transplanting machine as defined in any one of claims 1 to 5, characterized in that the cutting edges (48, 48′) of the spades (44, 44′) forming a closed bucket engage each other in zigzag configuration and the longest of them have a length of 20 to 30 per cent of the spherical radius (R) of the spades (44, 44′).

## Revendications

1. Appareil à transplanter des arbres comportant:

— un dispositif porteur (10) à installer sur un véhicule,
— deux parties de châssis principal (22, 22′) qui sont installées sur le dispositif porteur (10) de façon à pouvoir monter et descendre et qui peuvent se refermer dans une position basse d'excavation autour d'un arbre ou arbustre à transplanter sous forme d'un châssis principal (22, 22′) qui est situé dans un plan sensiblement horizontal,
— deux paires de paliers (28, 28′) qui sont fixés sur les parties de châssis principal (22, 22′),
— deux bêches (44, 44′), qui ont chacune au moins approximativement une surface ayant la forme d'un quart de sphère et qui sont chacune montées sur une paire de paliers (28, 28′) de façon à pouvoir pivoter autour d'un axe de rotation (34, 34′), les axes de rotation des deux bêches (44, 44′) étant au moins approximativement parallèles au plan du châssis principal (22, 22′), passant par le centre (46, 46′) du quart de sphère associé et se rejoignant lorsque le châssis principal (22, 22′) est fermé,
— et des dispositifs de pivotement (36, 36′) qui s'appuient sur le châssis principal (22, 22′) et sont reliés aux bêches (44, 44′) pour les faire pivoter autour de leurs axes de rotation (34, 34′) entre une position dans laquelle elles forment une benne pratiquement fermée, et une position d'ouverture,

caractérisé en ce que

— le châssis principal (22, 22′) est disposé à l'intérieur du volume entouré par les deux bêches (44, 44′),
— les paliers (28, 28′) dépassent de ce volume vers le haut,
— les bêches (44, 44′) sont fixées sur des bras porteurs (32, 32′) qui sont montés respectivement dans un plan coupant ce volume à la façon d'une sécante en pouvant pivoter autour d'un palier respectif (28, 28′),
— et les dispositifs de pivotement (36, 36′) sont des entraînements linéaires, articulés sur les paliers (28, 28′) et les bras porteurs (32, 32′).

2. Appareil à transplanter des arbres selon la revendication 1, caractérisé en ce que chaque palier (28) fixé sur une des parties de châssis principal (22) comporte une surface d'appui (30) qui, lorsque le châssis principal (22, 22′) est fermé, s'applique contre une surface d'appui correspondante (30′) d'un palier (28′) fixé sur l'autre partie de châssis principal (22′).

3. Appareil à transplanter des arbres selon la revendication 2, caractérisé en ce que les zones d'articulation des dispositifs de pivotement (36, 36′) sur les paliers (28, 28′) sont situées, quand le châssis principal (22, 22′) est fermé, sur un axe d'articulation commun (40), qui s'étend au moins approximativement perpendiculairement aux surfaces d'appui (30, 30′) des paliers (28, 28′).

4. Appareil à transplanter des arbres selon une des revendications 1 à 3, caractérisé en ce que les bêches (44, 44′) sont chacune renforcées sur leur bord supérieur par un bâti de bêche (42, 42′), au moyen duquel elles sont fixées sur les bras porteurs associés (32, 32′).

5. Appareil à transplanter des arbres selon la revendication 4, caractérisé en ce que les arêtes de coupe (48, 48′) des bêches (44, 44′) sont meulées en biseau sur leur côté intérieur.

6. Appareil à transplanter des arbres selon une des revendications 1 à 5, caractérisé en ce que les arêtes de coupe (48, 48′) des bêches (44, 44′), réunies sous forme d'une benne fermée, s'accrochent l'une dans l'autre en forme de zig-zag et les plus longues d'entre elles ont une longueur comprise entre 20 et 30% du rayon de sphère des bêches (44, 44′).

FIG.1

FIG.2

**FIG.3**

**FIG.5**

FIG.6

FIG.4